# EUROPÄISCHE PATENTSCHRIFT

(11) **EP 4 520 291 B1**
(45) Veröffentlichungstag und Bekanntmachung des Hinweises auf die Patenterteilung: **27.05.2026**
(21) Anmeldenummer: 23196485.9
(22) Anmeldetag: 11.09.2023
(51) Int. Cl.: A61C 8/00, A61C 13/12

(54) **EXTRAKTOR FÜR EIN ABUTMENT**
EXTRACTOR FOR AN ABUTMENT
EXTRACTEUR POUR UN PILIER

(43) Veröffentlichungstag der Anmeldung: 12.03.2025
(73) Patentinhaber: Steger, Heinrich, 39032 Sand in Taufers (IT)
(72) Erfinder: STEGER, Heinrich, 39032 Sand in Taufers (IT); HELLWEGER, Manuel, 39030 Gais (IT)
(74) Vertreter: Schwarz & Partner Patentanwälte GmbH

(56) Entgegenhaltungen:
- WO-A1-2011/080104
- WO-A1-2018/037250

## Beschreibung

Die vorliegende Erfindung betrifft einen Extraktor für ein Abutment, umfassend einen Werkzeugabschnitt mit einem Befestigungsabschnitt zur lösbaren Befestigung des Extraktors mit dem Abutment, einen Drehgriff und einen stiftförmigen Abschnitt zwischen Werkzeugabschnitt und Drehgriff.

### HINTERGRUND DER ERFINDUNG

Bei der Herstellung von Zahnersatz wird nach Stand der Technik regelmäßig eine Zahnkrone mittels eines Abutments mit einem Kieferimplantant verschraubt. Die Zahnkrone weist oft - insbesondere bei Schneidezähnen - einen abgewinkelten Schraubenkanal auf, um die Baugruppe am Kieferimplantat zu verschrauben. Dabei tritt aufgrund der abgewinkelten Schraubenkanäle häufig das Problem auf, dass nach dem Verschrauben der Baugruppe am Kieferimplantat die Baugruppe zwischen Kieferimplantat und Zahnkrone durch Kaubewegungen zusätzlich mit Axialkräften belastet werden. So entstehen in der Baugruppe kleinere Verformungen, die oft als Konusflächen ausgebildet sind, sodass es zu Verklemmungen in der Verbindung der Baugruppe und zwischen den einzelnen Komponenten im Zahnersatz kommen kann. In weiterer Folge lässt sich die Baugruppe nur schwer oder gar nicht mehr lösen.

Bei Restaurationen mit geradlinig ausgebildeten Schraubenkanälen kann die Baugruppe mit einem einfachen Extraktor (auch Ausdreher oder Abzieher genannt), der ein Außengewinde aufweist und mit einem Innengewinde in der Basis der Baugruppe verbunden wird, ohne Schwierigkeiten ausgehebelt werden. Bei abgewinkelten Schraubenkanälen benötigt man Extraktoren, die an die Neigung des Schraubenkanals angepasst sind.

WO 2018/037250 A1 offenbart einen dentalen Schraubenzieher für abgewinkelte Schraubenkanäle, mit einem Schaft aus einer Formgedächtnislegierung, der sich mit geringem oder gar keinem Widerstand entlang eines bogenbildenden Abschnitts biegt, wobei der Schraubenzieher mit einer Schraube geeigneter Größe zusammenwirkt. Der in WO 2018/037250 A1 offenbarte Schraubenzieher kann mit einem elastischen Extraktor verbunden werden, um die Entfernung des Abutments nach Entfernung der Schraube zu ermöglichen.

WO 2011/080104 A1 offenbart einen flexiblen dentalen Schraubenzieher, bei welchem im Unterschied zum Schraubenzieher aus WO 2018/037250 A1 der flexible Schaft eine Vielzahl an zylindrischen Schaftsegmenten aufweist. Spalten zwischen den Segmenten erlauben eine Biegung des flexiblen Schafts. Mithilfe des flexiblen Schraubenziehers können somit Schrauben in abgewinkelten Schraubenkanälen festgezogen und gelöst werden.

### KURZBESCHREIBUNG DER ERFINDUNG

Die Schraubenzieher bzw. Extraktoren gemäß WO 2011/080104 A1 und WO 2018/037250 A1 eignen sich zwar grundsätzlich zur Extraktion einer Baugruppe für gerade und abgewinkelte Schraubenkanäle. Allerdings sind diese Extraktoren gemäß Stand der Technik eher unhandlich und schwer zu Positionieren. Die Verwendung von Formgedächtnislegierungen ist darüber hinaus sehr kostspielig.

Aufgabe der vorliegenden Erfindung ist die Bereitstellung eines Extraktors, bei dem die genannten Nachteile vermindert sind. Insbesondere soll der Extraktor handlicher im Umgang sein und schwer sitzende Abutments leichter lösen können.

Gelöst wird diese Aufgabe durch einen Extraktor für ein Abutment, umfassend
einen Werkzeugabschnitt mit einem Befestigungsabschnitt zur lösbaren Befestigung des Extraktors mit dem Abutment,
einen vorzugsweise lösbar befestigten Drehgriff und
einen stiftförmigen Abschnitt zwischen Befestigungsabschnitt und Drehgriff,
   dadurch gekennzeichnet, dass
der Drehgriff auf einem Schaftabschnitt angeordnet ist, wobei der Schaftabschnitt einen Verbindungsvorsprung aufweist,
wobei der stiftförmige Abschnitt auf dem Werkzeugabschnitt angeordnet ist, wobei der Werkzeugabschnitt eine Verbindungshülse aufweist,
wobei der Verbindungsvorsprung mit der Verbindungshülse lösbar und vorzugweise formschlüssig verbindbar ist,
wobei der stiftförmige Abschnitt einen biegbaren Abschnitt aufweist.

Erfindungsgemäß ist der Extraktor für ein Abutment also zumindest zweiteilig ausgebildet, wobei der der Schaftabschnitt mit dem Drehgriff über einen Verbindungsvorsprung mit einer Verbindungshülse am Werkzeugabschnitt lösbar verbindbar ist. Durch diese Zweiteiligkeit des Extraktors kann der Werkzeugabschnitt unabhängig vom Schaftabschnitt mit Drehgriff in einen abgewinkelten Schraubenkanal eingeführt werden. Bevorzugt ist der Verbindungsvorsprung mit der Verbindungshülse lösbar und formschlüssig verbindbar. Dadurch wird die Passgenauigkeit der Verbindung von Schaftabschnitt und Werkzeugabschnitt erhöht.

Durch den stiftförmigen Abschnitt, der einen biegbaren Abschnitt aufweist, kann sich der Werkzeugabschnitt der Form des Schraubkanals anpassen und mit dem Befestigungsabschnitt am Abutment befestigt werden. Anschließend kann der Schaftabschnitt mit dem Verbindungsvorsprung in die Verbindungshülse eingeführt und lösbar verbunden werden. Auf diese Art ist es - anders als beim Stand der Technik mit einem einteiligen Extraktor mit biegbarem Abschnitt - möglich, zunächst nur einen Teil des Extraktors, nämlich den Werkzeugabschnitt, in den abgewinkelten Schraubenkanal einzuführen und erst danach zum fertigen Extraktor durch Verbinden mit den Schaftabschnitt zusammenzubauen. Erst nach dem Zusammenbau erfolgt die endgültige Extraktion der Baugruppe.

Es wurde somit eine Möglichkeit gefunden, den Extraktor noch flexibler zu fertigen, sodass er auch in gebogene und abgewinkelte Kanäle eingeführt werden kann, wobei zudem das für den Abzug der Baugruppen benötigte Drehmoment rotativ übertragen werden kann.

Unter einem biegbar ausgebildeten Abschnitt im stiftförmigen Abschnitt wird erfindungsgemäß eine reversible Biegbarkeit verstanden. D.h. der zunächst aufrechte stiftförmige Abschnitt ist biegbar, sodass er sich an die Krümmung in einem abgewinkelten Schraubkanal anpassen kann. Wird er wieder aus dem Schraubkanal herausgenommen, richtet er sich in den aufrechten Zustand auf.

Der stiftförmige Abschnitt weist einen biegbaren Abschnitt auf, sodass der stiftförmige Abschnitt im biegbaren Abschnitt quer zur Längsachse des stiftförmigen Abschnitts gebogen werden kann. Der biegbare Abschnitt weist in diesem Bereich also eine gewisse Flexibilität auf. Bevorzugt ist der biegbare Abschnitt rückstellwirkend ausgebildet, d.h., dass er bei Krafteinwirkung biegbar ist und bei Entfernung der Krafteinwirkung wieder in die ursprüngliche (stiftförmige) Ausgangslage zurückkehrt.

Der biegbare Abschnitt kann die Biegbarkeit z.B. daher beziehen, dass eine zylinderförmige Hülse mit Ausnehmungen vorgesehen ist. Zusätzlich oder alternativ dazu kann der stiftförmige Abschnitt seine Biegbarkeit daher beziehen, dass eine Spiralfeder vorgesehen ist. Sowohl eine zylinderförmige Hülse mit Ausnehmungen als auch eine Spiralfeder ermöglichen die rückstellende Wirkung auf einfache Art.

Bevorzugt reicht der Verbindungsvorsprung im verbundenen Zustand in die Verbindungshülse bis zum Befestigungsabschnitt hinein. Auf diese Art wird die Außenseite am Befestigungsabschnitt zusätzlich in die Ausnehmung (mit oder ohne Innengewinde) des Abutment gedrückt und verkeilt den Extraktor mit dem Abutment.

In einer Ausführungsvariante ist vorgesehen, dass der Befestigungsabschnitt Spreizelemente oder eine Hülse umfasst, wobei die Verbindungshülse bis in den Befestigungsabschnitt reicht. Auf diese Weise kann der Befestigungsabschnitt mit der Ausnehmung im Abutment in Eingriff treten und eine Verbindung mit dem Abutment durch Verspreizen der Spreizelemente oder der Hülse eingehen.

Neben dem Werkzeugabschnitt kann auch der Schaftabschnitt einen stiftförmigen Abschnitt aufweisen, welcher im verbundenen Zustand von Schaftabschnitt und Werkzeugabschnitt in die Verbindungshülse eingeführt ist und zumindest bis in den Befestigungsabschnitt ragt.

Für das Verspreizen von Hülse oder Spreizelementen kann der stiftförmige Vorsprung eine Dicke aufweisen, die größer als der Innendurchmesser der Verbindungshülse im Bereich des Befestigungsabschnitts ist.

Weiters kann vorgesehen sein, dass der stiftförmige Vorsprung im verbundenen Zustand von Schaftabschnitt und Werkzeugabschnitt durch eine Ausnehmung im Werkzeugabschnitt hindurch ragt. Der stiftförmige Vorsprung kann dann an das Kieferimplantat anliegend die Hebelwirkung zum Aushebeln der Baugruppe vergrößern.

Die Verbindungshülse kann einen Haltebereich aufweisen. Der Haltebereich ermöglicht die einfachere und genauere Positionierung des Werkzeugabschnitts im Schraubkanal. Der Haltebereich ermöglicht aber auch eine einfachere Relativbewegung von Schaftabschnitt zu Werkzeugabschnitt.

Der Verbindungsvorsprung des Schaftabschnitts kann ebenfalls einen biegbaren Abschnitt aufweisen. Damit ist die Flexibilität des Extraktors noch weiter erhöht. Es kann damit die Extraktion der Baugruppe leichter erfolgen.

Der biegbare Abschnitt des Verbindungsvorsprungs ist bevorzugt im verbundenen Zustand von Schaftabschnitt und Werkzeugabschnitt auf Höhe des biegbaren Abschnitts des Werkzeugabschnitts angeordnet.

Der Verbindungsvorsprung kann mit der Verbindungshülse über einen Schraubverbindung lösbar verbindbar sein. Dadurch wird eine Art Abzieher gebildet, mit dem der Schaftabschnitt relativ zum Werkzeugabschnitt verdreht werden kann. Mit dem stiftförmigen Vorsprung, der am Kieferimplantat anliegt, kann die Baugruppe so über die Hebelwirkung am Kieferimplantat ausgedreht werden.

Diese Schraubverbindung kann von einem Außengewindeabschnitt am Schaftabschnitt und einem Innengewindeabschnitt am Werkzeugabschnitt gebildet werden.

Bevorzugt ist vorgesehen, dass der Außengewindeabschnitt am Schaftabschnitt zwischen Drehgriff und stiftförmigen Abschnitt, vorzugsweise zwischen Drehgriff und biegbarem Abschnitt des Schaftabschnitts, angeordnet ist. Dies sorgt für eine leichte Aushebelbarkeit der Baugruppe.

Der Innengewindeabschnitt ist idealerweise am Werkzeugabschnitt im Haltebereich angeordnet, da so die Relativbewegung von Schaftabschnitt zu Werkzeugabschnitt am leichtesten koordinierbar ist.

Um die Biegbarkeit der stiftförmigen Abschnitte zu erzielen, gibt es - wie bereits oben angedeutet - verschiedene Lösungen.

Der biegbare Abschnitt des stiftförmigen Abschnitts und / oder der biegbare Abschnitt des Schaftabschnitts können eine zylinderförmige Hülse mit Ausnehmungen umfassen.

Der biegbare Abschnitt des stiftförmigen Abschnitts und / oder der biegbare Abschnitt des Schaftabschnitts können eine Spiralfeder umfassen.

Der Befestigungsabschnitt kann z.B. ein Außengewinde umfassen. Mit einem solchen Außengewinde kann der Werkzeugabschnitt des Extrators in eine Ausnehmung mit Innengewinde am Abutment eingedreht werden, um den Werkzeugabschnitt mit dem Abutment zu verbinden.

Der Befestigungsabschnitt kann z.B. Spreizelemente umfassen. Die Spreizelemente sind z.B. über einen Aktuator betätigbar, sodass die Spreizelemente nach Einführen in eine Ausnehmung am Abutment eine kraftschlüssige und vorzugsweise lösbare Verbindung mit dem Abutment herstellen. So kann auch ein Abutment ohne Innengewinde oder mit nicht passendem oder beschädigtem Gewinde mit dem Extraktor verbunden werden.

Der Verbindungsvorsprung ist mit der Verbindungshülse auf verschiedene Arten verbindbar. Die bevorzugte Verbindung ist über einen Spanndorn, der formschlüssig und lösbar in die Verbindungshülse eingebracht wird. Dabei drückt der Spanndorn gegen die Innenwand der Verbindungshülse und geht zusätzlich eine reibschlüssige Verbindung ein.

Eine andere Art der Verbindung von Verbindungsvorsprung mit Verbindungshülse kann über einen Schraubverbindung erfolgen. Bevorzugt ist das Gewinde am Verbindungsvorsprung gegenläufig zum Außengewinde für die Schraubverbindung.

Im Rahmen der Erfindung ist auch ein Verfahren zum Extrahieren eines Abutments aus einer Zahnrestauration mit einem Extraktor der vorgenannten Art vorgesehen. Das Verfahren sieht vor, dass der Schaftabschnitt mit dem Befestigungsabschnitt in einen Schraubkanal einer Zahnrestauration eingeführt wird, wobei der Befestigungsabschnitt mit einer Ausnehmung an einem Abutment befestigt wird, wobei anschließend der Schaftabschnitt mit dem Verbindungsvorsprung über die Verbindungshülse am Werkzeugabschnitt verbunden wird, wobei anschließend das Abutment extrahiert wird.

### DETAILLIERTE BESCHREIBUNG DER ERFINDUNG

Weitere Vorteile und Details der Erfindung sind in den beiliegenden Figuren und in der nachfolgenden Figurenbeschreibung erläutert.
- Fig. 1: zeigt einen erfindungsgemäßen Extraktor kurz vor dem Verbinden des Werkzeugabschnitts mit dem Schaftabschnitt im Schrägriss.
- Fig. 2a & 2b: zeigt einen erfindungsgemäßen Extraktor in Explosionsdarstellung in zwei Ansichten, wobei Fig. 2a und 2b dem Ausführungsbeispiel aus Fig. 1 entsprechen.
- Fig. 3a & 3b: zeigt einen weiteren erfindungsgemäßen Extraktor in Explosionsdarstellung in zwei Ansichten.
- Fig. 4: zeigt eine Ausführungsvariante eines Extraktors.

Bei den Ausführungsbeispielen werden dieselben Bauteile mit denselben Bezugszeichen versehen. Um unnötige Wiederholungen zu vermeiden, werden nicht alle Bauteile bei allen Figurenbeschreibungen erläutert. Es darf diesbezüglich auf bereits erläuterte Bauteile / Merkmale verwiesen werden.

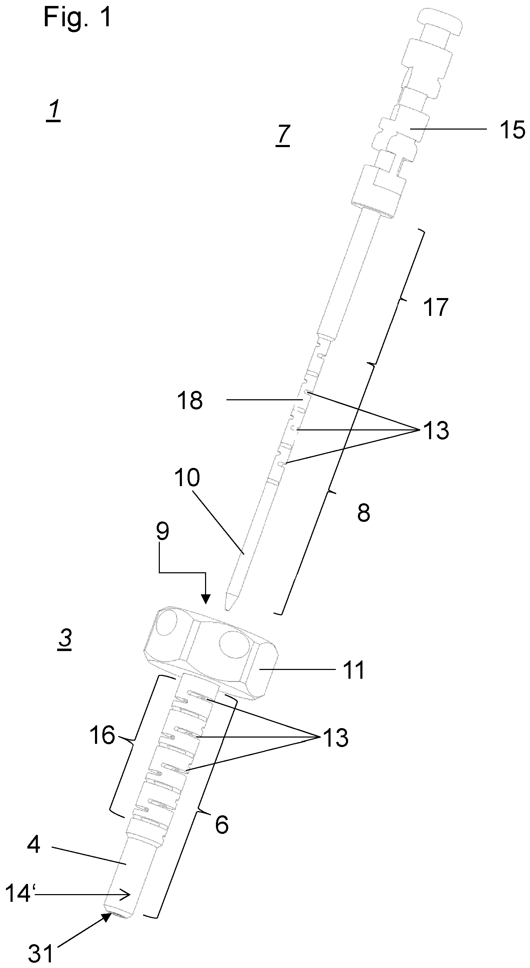

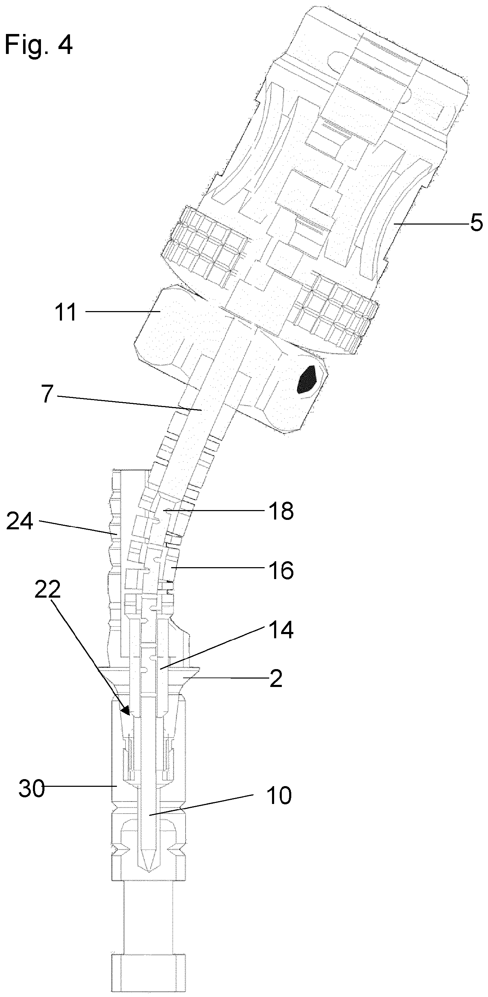

Fig. 1, 2a, 2b, 3a, 3b und 4 zeigen einen Extraktor 1 für ein Abutment 2 (das Abutment 2 ist aus Übersichtlichkeitsgründen nur in Fig. 4 dargestellt). Der Extraktor 1 ist mehrteilig ausgebildet und umfasst zumindest einen Werkzeugabschnitt 3 und einen Schaftabschnitt 7. Am Werkzeugabschnitt 3 ist ein stiftförmiger Abschnitt 6 vorgesehen, an dessen Ende der Befestigungsabschnitt 4 angeordnet ist. Über den Befestigungsabschnitt 4 kann der Werkzeugabschnitt 3 des Extraktors 1 lösbar mit einem Abutment 2 (nur in Fig. 4 gezeigt) befestigt werden, indem der Befestigungsabschnitt 4 mit einer Ausnehmung 22 am Abutment 2 in Eingriff gebracht wird. Der Werkzeugabschnitt 3 weist an dem dem Befestigungsabschnitt 4 gegenüberliegenden Ende einen Haltebereich 11 auf.

Der Werkzeugabschnitt 3 kann im Haltebereich 11 von der anwendenden Person gehalten werden, wobei diese den stiftförmigen Abschnitt 6 mit dem Befestigungsabschnitt 4 voraus in einen Schraubkanal einer Zahnrestauration einführt. Wenn der Schraubkanal eine Neigung bzw. Krümmung aufweist, kann sich der stiftförmige Abschnitt 6 im biegbaren Abschnitt 16 an die Neigung bzw. Krümmung des Schraubkanals anpassen. Der Befestigungsabschnitt 4 wird so weit in den Schraubkanal eingeschoben, bis der Befestigungsabschnitt 4 in die Ausnehmung 22 am Abutment 2 eingreift.

Zur Befestigung des Befestigungsabschnitts 4 mit der Ausnehmung 22 des Abutments 2 kann der Befestigungsabschnitt 4 ein Außengewinde umfassen, das mit einem Innengewinde am Abutment verschraubt wird. Alternativ oder ergänzend zu einem Außengewinde kann der Befestigungsabschnitt 4 auch Spreizelemente 14 oder eine dehnbare Hülse 14' umfassen, die z.B. wie bei einem Spanndorn nach außen gedrückt werden. So kann eine formschlüssige Verbindung zwischen Befestigungsabschnitt 4 und der Ausnehmung 22 am Abutment 2 hergestellt werden (siehe dazu Fig. 4).

Am Werkzeugabschnitt 3 ist eine Verbindungshülse 9 vorgesehen, sodass der Werkzeugabschnitt 3 mit dem Schaftabschnitt 7 verbindbar ist. Der mit dem Werkzeugabschnitt 3 verbundene Schaftabschnitt 7 ist in Fig. 4 dargestellt. Es ist erkennbar, dass ein großer Teil des Schaftabschnitts 7 in die Verbindungshülse 9 des Werkzeugabschnitts 3 eingeschoben ist. Einerseits reicht die Verbindungshülse 9 bis in den Befestigungsabschnitt 4. Andererseits reicht der Verbindungsvorsprung 8 im verbundenen Zustand in die Verbindungshülse 9 ebenfalls zumindest bis zum Befestigungsabschnitt 4.

Der Schaftabschnitt 7 weist einen stiftförmigen Vorsprung 10 auf. Der Vorsprung 10 ragt im verbundenen Zustand von Schaftabschnitt 7 und Werkzeugabschnitt 3 in die Verbindungshülse 9 bis in den Befestigungsabschnitt 4 und darüber hinaus.

Der stiftförmige Vorsprung 10 hat in den Ausführungsbeispielen eine Dicke, die größer als der Innendurchmesser der Verbindungshülse 9 im Bereich des Befestigungsabschnitts 4 ist. Dadurch verspreizt der stiftförmige Vorsprung 10 die Spreizelemente 14 bzw. die Hülse 14' gegen das Abutment 2 und wirkt wie ein Spanndorn (siehe drei Absätze weiter oben).

Der Verbindungsvorsprung 8 ist mit der Verbindungshülse 9 über einen Schraubverbindung lösbar verbindbar. Dazu wird die Schraubverbindung von einem Außengewindeabschnitt 17 am Schaftabschnitt 7 und einem Innengewindeabschnitt am Werkzeugabschnitt 3 gebildet.

Der Außengewindeabschnitt 17 ist am Schaftabschnitt 7 zwischen Drehgriff 5 und stiftförmigen Abschnitt 10, genauer gesagt, zwischen Drehgriff 5 und biegbarem Abschnitt 18 des Schaftabschnitts 7, angeordnet.

In Fig. 4 ist erkennbar, dass der stiftförmige Vorsprung 10 im verbundenen Zustand von Schaftabschnitt 7 und Werkzeugabschnitt 3 durch eine Ausnehmung 31 im Werkzeugabschnitt 3 hindurch ragt. Das Ende des Vorsprungs 10 liegt am Kieferimplantat 30 auf, sodass der Vorsprung 10 bei Drehen am Drehgriff ausgedreht und ausgehebelt wird.

Der Verbindungsvorsprung 8 des Schaftabschnitts 7 weist einen biegbaren Abschnitt 18 auf.

Der biegbare Abschnitt 18 des Verbindungsvorsprungs 8 ist im verbundenen Zustand von Schaftabschnitt 7 und Werkzeugabschnitt 3 auf Höhe des biegbaren Abschnitts 16 des Werkzeugabschnitts 3 angeordnet.

Sowohl der biegbare Abschnitt 16 des stiftförmigen Abschnitts 6 als auch der biegbare Abschnitt 18 des Schaftabschnitts 7 umfassen eine zylinderförmige Hülse mit Ausnehmungen 13. Der biegbare Abschnitt 16 des stiftförmigen Abschnitts 6 und der biegbare Abschnitt 18 des Schaftabschnitts 7 könnten zusätzlich oder alternativ dazu eine Spiralfeder umfassen.

Der Schaftabschnitt 7 weist einen Verbindungsvorsprung 8 auf, der in die Verbindungshülse 9 formschlüssig und lösbar einbringbar ist. Am oberen Ende des Schaftabschnitts 7 ist ein Drehgriff 5 vorgesehen, um den Schaftabschnitt 7 mit dem Werkzeugabschnitt 3 zu verdrehen. Der Drehgriff 5 ist aus Übersichtlichkeitsgründen nur in Fig. 4 gezeigt. In den übrigen Figuren ist ein Anschluss 15 für den eigentlichen Drehgriff 5 dargestellt, wobei der Drehgriff 5 auf den Anschluss 15 aufgesetzt wird.

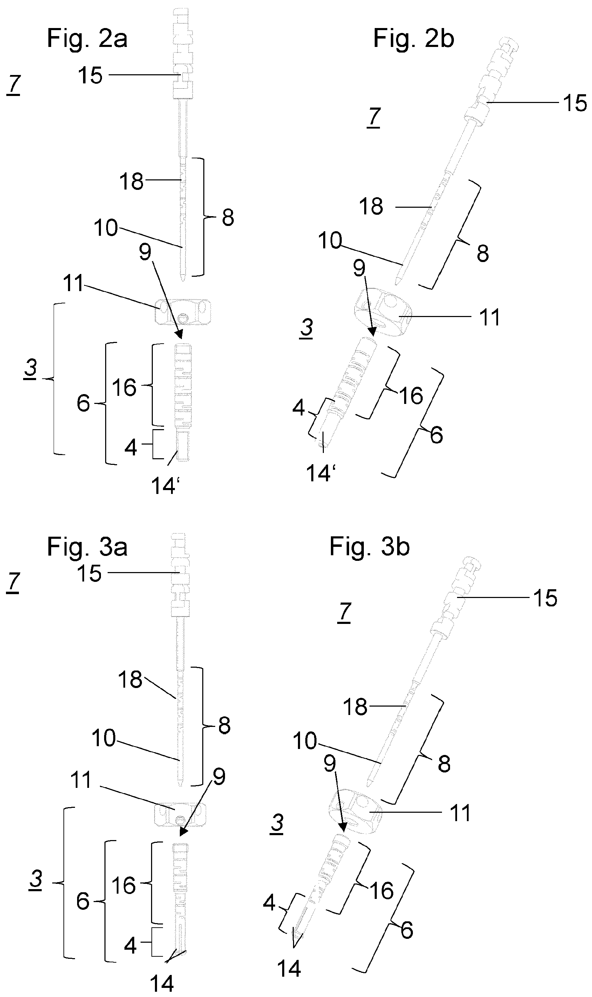

Der Verbindungsvorsprung 8 kann einen stiftförmigen Abschnitt 10 aufweisen. Dieser stiftförmige Abschnitt 10 bildet einen Spanndorn, der die Spreizelemente 14 oder die Hülse 14' verspreizt, sodass die Spreizelemente 14 oder die Hülse 14' mit der Verbindungshülse 9 über den Spanndorn formschlüssig und lösbar verbindbar sind (siehe Fig. 4). Die Funktion des stiftförmigen Abschnitts 10 als Spanndorn im Eingriff mit den Spreizelementen 14 ist in Fig. 3a und 3b sowie Fig. 4 dargestellt. Beim Ausführungsbeispiel der Fig. 1, 2a und 2b bildet der stiftförmigen Abschnitt 10 ebenfalls einen Spanndorn, der den Verbindungabschnitt 4 über die außenliegende Hülse 14'verspreizt, sodass mit den mit der Verbindungshülse 9 über einen Spanndorn formschlüssig und lösbar ist.

Der Verbindungsvorsprung 8 kann mit der Verbindungshülse 9 über einen Schraubverbindung formschlüssig und lösbar verbindbar sein. Hierfür ist oberhalb des weiter unten genauer beschriebenen biegbaren Abschnitts 18 ein Außengewindeabschnitt 17 vorgesehen, der mit einem Innengewindeabschnitt am Werkzeugabschnitt 3 auf Höhe des Haltebereichs 11 in Eingriff gebracht werden kann. Die Kombination aus Schraubverbindung und Spanndornmechanismus führt zu einer noch stabileren Verbindung aus Schaftabschnitt 7, Werkzeugabschnitt 3 und Abutment 2. Zusätzlich ermöglicht eine solche Schraubverbindung ein Aushebeln des Abutments 2 aus dem Implantat.

Der stiftförmige Abschnitt 6 weist eine zylinderförmige Hülse mit Ausnehmungen 13 auf, die den biegbaren Abschnitt 16 bilden. Alternativ dazu kann der biegbare Abschnitt 16 im Bereich des stiftförmigen Abschnitts 6 eine Spiralfeder umfassen.

Der Verbindungsvorsprung 8 reicht im verbundenen Zustand in die Verbindungshülse 9 bis zum Befestigungsabschnitt 4. Daher ist es vorteilhaft, wenn der Verbindungsvorsprung 8 im Zustand, bei dem Schaftabschnitt 7 und Werkzeugabschnitt 3 miteinander verbunden sind, auf Höhe des biegbaren Abschnitts des Werkzeugabschnitts 3 ebenfalls einen biegbaren Abschnitt 18 aufweist. Dazu ist der Verbindungsvorsprung 8 des Schaftabschnitts 7 zumindest abschnittsweise flexibel ausgebildet. Analog zum biegbaren Abschnitt 18 am Werkzeugabschnitt 3 kann auch hier im Bereich des biegbaren Abschnitts 18 eine zylinderförmige Hülse mit Ausnehmungen 13 vorgesehen sein. Auch eine Spiralfeder kann im biegbaren Bereich 18 vorgesehen sein.

Während in den Fig. 1 bis 3 der Extraktor 1 in aufrechter Position des stiftförmigen Abschnitts 6 gezeugt ist, sieht man in Fig. 4 den Zustand nach Einbau mit gekrümmten biegbaren Abschnitten 16, 18. Solange auf die biegbaren Abschnitte 16, 18 eine seitliche Kraft ausgeübt wird, ist der Extraktor 1 gebogen. Die Kraft entsteht durch die Einführung des Extraktors 1 in den geneigten Schraubkanal und den federnden Elementen (durch die Öffnungen 13 und die Hülse gebildet).

Erkennbar ist in Fig. 4 ferner, dass im zusammengebauten Zustand des Extraktors 1 der stiftförmige Abschnitt 10 des Schaftabschnitts 7 durch die axiale Ausnehmung 31 des Werkzeugabschnitts 3 bis zum Implantat 30 reicht. Wenn der Schaftabschnitt 7 in den Werkzeugabschnitt 3 eingedreht wird, greift der Außengewindeabschnitt 17 mit dem Innengewindeabschnitt am Werkzeugabschnitt 3 auf Höhe des Haltebereichs 11 ein und bewegt den Schaftabschnitt 7 zum Werkzeugabschnitt 3 hin, bis der der stiftförmige Abschnitt 10 am Grund des Kieferimplantats 30 ansteht. Bei weiterem Drehen des Schaftabschnitts 7 in den Werkzeugabschnitt 3 hebelt der stiftförmige Abschnitt 10 die gesamte Baugruppe aus Abutment 2 und gegebenenfalls Zahnkrone etc. aus dem Kieferimplantat 30 heraus.

Sollte das Abutment 2 im Bereich der Ausnehmung 22 über kein Innengewinde oder ein beschädigtes Innengewinde verfügen, so wird bei dem im vorherigen Absatz beschriebenen Vorgehen der Befestigungsabschnitt 4 durch den stiftförmigen Abschnitt 10 axial verspreizt und mit der Ausnehmung 22 verklemmt. D.h. der der stiftförmige Abschnitt 10 drückt Spreizelemente 14 nach außen oder erweitert die Hülse 14', indem z.B. der stiftförmige Abschnitt 10 dicker als der Durchmesser der axialen Ausnehmung 31 ist, sodass die Hülse 14' nach außen gedrückt wird. Zusätzlich oder alternativ dazu kann im Befestigungsabschnitt 4 auch Außengewinde vorgesehen sein, das in ein am Abutment 2 passendes Innengewinde im Bereich der Ausnehmung 22 des Abutments 2 eingreift. So kann der Befestigungsabschnitt 4 mit dem Abutment 2 verschraubt werden und ausgehebelt werden.

Zusätzlich ist in Fig. 4 eine halbseitig offene Hülse 24 dargestellt. Die halbseitig offene Hülse sitzt am Abutment 2 und dient dem Schutz des Schraubkanals bzw. der Zahnkrone (nicht gezeigt) und der Baugruppe.

## Patentansprüche

1. Extraktor (1) für ein Abutment (2), umfassend
einen Werkzeugabschnitt (3) mit einem Befestigungsabschnitt (4) zur lösbaren Befestigung des Extraktors (1) mit dem Abutment (2),
einen vorzugsweise lösbar befestigten Drehgriff (5) und
einen stiftförmigen Abschnitt (6) zwischen Befestigungsabschnitt (4) und Drehgriff (5), wobei
der Drehgriff (5) auf einem Schaftabschnitt (7) angeordnet ist, wobei der Schaftabschnitt (7) einen Verbindungsvorsprung (8) aufweist,
wobei der stiftförmige Abschnitt (6) auf dem Werkzeugabschnitt (3) angeordnet ist, **dadurch gekennzeichnet, dass** der Werkzeugabschnitt (3) eine Verbindungshülse (9) aufweist,
wobei die Verbindungshülse (9) vorzugweise einen Haltebereich (11) aufweist,
wobei der Verbindungsvorsprung (8) mit der Verbindungshülse (9) lösbar verbindbar ist,
wobei der stiftförmige Abschnitt (6) einen biegbaren Abschnitt (16) aufweist.

2. Extraktor nach Anspruch 1, **dadurch gekennzeichnet, dass** der Verbindungsvorsprung (8) im verbundenen Zustand in die Verbindungshülse (9) zumindest bis zum Befestigungsabschnitt (4) reicht.

3. Extraktor nach Anspruch 1 oder Anspruch 2, **dadurch gekennzeichnet, dass** der Befestigungsabschnitt (4) Spreizelemente (14) und / oder eine Hülse (14') umfasst, wobei die Verbindungshülse (9) bis in den Befestigungsabschnitt (4) reicht.

4. Extraktor nach Anspruch 3, **dadurch gekennzeichnet, dass** der Schaftabschnitt (7) einen stiftförmigen Vorsprung (10) aufweist, welcher im verbundenen Zustand von Schaftabschnitt (7) und Werkzeugabschnitt (3) in die Verbindungshülse (9) eingeführt ist und zumindest bis in den Befestigungsabschnitt (4) ragt.

5. Extraktor nach Anspruch 4, **dadurch gekennzeichnet, dass** der stiftförmige Vorsprung (10) eine Dicke aufweist, die größer als der Innendurchmesser der Verbindungshülse (9) im Bereich des Befestigungsabschnitts (4) ist.

6. Extraktor nach Anspruch 4 oder Anspruch 5, **dadurch gekennzeichnet, dass** der stiftförmige Vorsprung (10) im verbundenen Zustand von Schaftabschnitt (7) und Werkzeugabschnitt (3) durch eine Ausnehmung (31) im Werkzeugabschnitt (3) hindurch ragt.

7. Extraktor nach einem der Ansprüche 1 bis 6, **dadurch gekennzeichnet, dass** der Verbindungsvorsprung (8) des Schaftabschnitts (7) einen biegbaren Abschnitt (18) aufweist.

8. Extraktor nach Anspruch 7, **dadurch gekennzeichnet, dass** der biegbare Abschnitt (18) des Verbindungsvorsprungs (8) im verbundenen Zustand von Schaftabschnitt (7) und Werkzeugabschnitt (3) auf Höhe des biegbaren Abschnitts (16) des Werkzeugabschnitts (3) angeordnet ist.

9. Extraktor nach einem der Ansprüche 1 bis 8, **dadurch gekennzeichnet, dass** der Verbindungsvorsprung (8) mit der Verbindungshülse (9) über eine Schraubverbindung lösbar verbindbar ist, wobei vorzugsweise die Schraubverbindung von einem Außengewindeabschnitt (17) am Schaftabschnitt (7) und einem Innengewindeabschnitt am Werkzeugabschnitt (3) gebildet wird.

10. Extraktor nach Anspruch 9, **dadurch gekennzeichnet, dass** der Außengewindeabschnitt (17) am Schaftabschnitt (7) zwischen Drehgriff (5) und stiftförmigen Abschnitt (10), vorzugsweise zwischen Drehgriff (5) und biegbarem Abschnitt (18) des Schaftabschnitts (7), angeordnet ist.

11. Extraktor nach Anspruch 9 oder Anspruch 10, **dadurch gekennzeichnet, dass** der Innengewindeabschnitt am Werkzeugabschnitt (3) im Haltebereich (11) angeordnet ist.

12. Extraktor nach einem der Ansprüche 1 bis 11, **dadurch gekennzeichnet, dass** der biegbare Abschnitt (16) des stiftförmigen Abschnitts (6) und / oder der biegbare Abschnitt (18) des Schaftabschnitts (7) eine zylinderförmige Hülse mit Ausnehmungen (13) umfasst.

13. Extraktor nach einem der Ansprüche 1 bis 12, **dadurch gekennzeichnet, dass** der biegbare Abschnitt (16) des stiftförmigen Abschnitts (6) und / oder der biegbare Abschnitt (18) des Schaftabschnitts (7) eine Spiralfeder umfasst.

14. Extraktor nach einem der Ansprüche 1 bis 13, **dadurch gekennzeichnet, dass** der Befestigungsabschnitt (4) ein Außengewinde umfasst.

15. Verfahren zum Extrahieren eines Abutments (2) aus einer Zahnrestauration mit einem Extraktor (1) nach einem der Ansprüche 1 bis 14, **dadurch gekennzeichnet, dass** der Schaftabschnitt (7) mit dem Befestigungsabschnitt (4) in einen Schraubkanal einer Zahnrestauration eingeführt wird, wobei der Befestigungsabschnitt (4) mit eine Ausnehmumg an einem Abutment (2) befestigt wird, wobei anschließend der Schaftabschnitt (7) mit dem Verbindungsvorsprung (8) über die Verbindungshülse (9) am Werkzeugabschnitt (3) verbunden wird, wobei anschließend das Abutment (2) extrahiert wird.

## Claims

1. Extractor (1) for an abutment (2), comprising
a tool section (3) with a fastening section (4) for detachably fastening the extractor (1) to the abutment (2),
a preferably detachably secured rotary handle (5) and
a pin-shaped section (6) between the fastening section (4) and the rotary handle (5),
wherein the rotary handle (5) is arranged on a shaft section (7), wherein the shaft section (7) has a connecting projection (8),
wherein the pin-shaped section (6) is arranged on the tool section (3),
**characterised in that**
the tool section (3) comprises a connecting sleeve (9),
wherein the connecting sleeve (9) preferably comprises a retaining portion (11),
wherein the connecting projection (8) is detachably connectable to the connecting sleeve (9),
wherein the pin-shaped section (6) comprises a bendable section (16).

2. Extractor according to claim 1, **characterised in that**, in the connected state, the connecting projection (8) extends into the connecting sleeve (9) at least as far as the fastening section (4).

3. Extractor according to claim 1 or claim 2, **characterised in that** the fastening section (4) comprises spreading elements (14) and/or a sleeve (14'), wherein the connecting sleeve (9) extends into the fastening section (4).

4. Extractor according to claim 3, **characterised in that** the shaft section (7) has a pin-shaped projection (10) which, when the shaft section (7) and tool section (3) are connected, is inserted into the connecting sleeve (9) and projects at least as far as the fastening section (4).

5. Extractor according to claim 4, **characterised in that** the pin-shaped projection (10) has a thickness greater than the internal diameter of the connecting sleeve (9) in the region of the fastening section (4).

6. An extractor according to claim 4 or claim 5, **characterised in that**, when the shaft section (7) and the tool section (3) are connected, the pin-shaped projection (10) protrudes through a recess (31) in the tool section (3).

7. Extractor according to any one of claims 1 to 6, **characterised in that** the connecting projection (8) of the shaft section (7) comprises a bendable section (18).

8. Extractor according to claim 7, **characterised in that** the bendable section (18) of the connecting projection (8) is arranged, when the shaft section (7) and the tool section (3) are connected, at the level of the bendable section (16) of the tool section (3).

9. Extractor according to any one of claims 1 to 8, **characterised in that** the connecting projection (8) can be detachably connected to the connecting sleeve (9) via a screw connection, wherein preferably the screw connection is formed by an external threaded section (17) on the shaft section (7) and an internal threaded section on the tool section (3).

10. Extractor according to claim 9, **characterised in that** the external threaded section (17) on the shaft section (7) is arranged between the rotary handle (5) and the pin-shaped section (10), preferably between the rotary handle (5) and the bendable section (18) of the shaft section (7).

11. Extractor according to claim 9 or claim 10, **characterised in that** the internal threaded section on the tool section (3) is arranged in the retaining area (11).

12. Extractor according to any one of claims 1 to 11, **characterised in that** the bendable section (16) of the pin-shaped section (6) and/or the bendable section (18) of the shaft section (7) comprises a cylindrical sleeve with recesses (13).

13. Extractor according to any one of claims 1 to 12, **characterised in that** the bendable section (16) of the pin-shaped section (6) and/or the bendable section (18) of the shaft section (7) comprises a coil spring.

14. An extractor according to any one of claims 1 to 13, **characterised in that** the fastening section (4) comprises an external thread.

15. A method for extracting an abutment (2) from a dental restoration using an extractor (1) according to any one of claims 1 to 14, **characterised in that** the shaft section (7) is inserted together with the fastening section (4) into a screw channel of a dental restoration, wherein the fastening section (4) is secured to a recess on an abutment (2), whereupon the shaft section (7) is connected to the connecting projection (8) via the connecting sleeve (9) on the tool section (3), whereupon the abutment (2) is extracted.

## Revendications

1. Extracteur (1) pour un pilier (2), comprenant:
une partie d'outil (3) ayant une partie de fixation (4) pour la fixation amovible de l'extracteur (1) au pilier (2),
une poignée rotative (5) fixée, de préférence, de façon amovible, et
une partie en forme de goupille (6) située entre la partie de fixation (4) et la poignée rotative (5),
la poignée rotative (5) étant disposée sur une partie d'arbre (7), la partie d'arbre (7) présentant une saillie de liaison (8),
la partie en forme de goupille (6) étant disposée sur la partie d'outil (3),
**caractérisé en ce que** la partie d'outil (3) comporte un manchon de liaison (9),
le manchon de liaison (9) présentant de préférence une zone de maintien (11),
la saillie de liaison (8) étant raccordable de façon amovible au manchon de liaison (9),
la partie en forme de goupille (6) présentant une partie flexible (16).

2. Extracteur selon la revendication 1, **caractérisé en ce que** la saillie de liaison (8) s'étend dans le manchon de liaison (9) au moins jusqu'à la partie de fixation (4) à l'état connecté.

3. Extracteur selon la revendication 1 ou selon la revendication 2, **caractérisé en ce que** la partie de fixation (4) comprend des éléments d'écartement (14) et/ou un manchon (14'), le manchon de liaison (9) s'étendant dans la partie de fixation (4).

4. Extracteur selon la revendication 3, **caractérisé en ce que** la partie d'arbre (7) présente une saillie en forme de goupille (10) qui, à l'état connecté de la partie d'arbre (7) et de la partie d'outil (3), est insérée dans le manchon de liaison (9) et s'étend au moins jusqu'à la partie de fixation (4).

5. Extracteur selon la revendication 4, **caractérisé en ce que** la saillie en forme de goupille (10) présente une épaisseur qui est supérieure au diamètre intérieur du manchon de liaison (9) au niveau de la partie de fixation (4).

6. Extracteur selon la revendication 4 ou selon la revendication 5, **caractérisé en ce que** la saillie en forme de goupille (10) traverse un évidement (31) dans la partie d'outil (3) à l'état connecté de la partie d'arbre (7) et de la partie d'outil (3).

7. Extracteur selon l'une quelconque des revendications 1 à 6, **caractérisé en ce que** la saillie de liaison (8) de la partie d'arbre (7) comporte une partie flexible (18).

8. Extracteur selon la revendication 7, **caractérisé en ce que** la partie flexible (18) de la saillie de liaison (8) est disposée au même niveau que la partie flexible (16) de la partie d'outil (3) à l'état connecté de la partie d'arbre (7) et de la partie d'outil (3).

9. Extracteur selon l'une quelconque des revendications 1 à 8, **caractérisé en ce que** la saillie de liaison (8) est raccordable de façon amovible au manchon de liaison (9) par un raccord vissé, le raccord vissé étant de préférence constitué d'une partie de filetage extérieur (17) sur la partie d'arbre (7) et d'une partie de filetage intérieur sur la partie d'outil (3).

10. Extracteur selon la revendication 9, **caractérisé en ce que** la partie de filetage extérieur (17) sur la section d'arbre (7) est disposée entre la poignée rotative (5) et la partie en forme de goupille (10), de préférence entre la poignée rotative (5) et la partie flexible (18) de la partie d'arbre (7).

11. Extracteur selon la revendication 9 ou selon la revendication 10, **caractérisé en ce que** la partie de filetage intérieur sur la partie d'outil (3) est disposée dans la zone de maintien (11).

12. Extracteur selon l'une quelconque des revendications 1 à 11, **caractérisé en ce que** la partie flexible (16) de la partie en forme de goupille (6) et/ou la partie flexible (18) de la partie d'arbre (7) comprennent/comprend un manchon cylindrique ayant des évidements (13).

13. Extracteur selon l'une quelconque des revendications 1 à 12, **caractérisé en ce que** la partie flexible (16) de la partie en forme de goupille (6) et/ou la partie flexible (18) de la partie d'arbre (7) comprennent/comprend un ressort hélicoïdal.

14. Extracteur selon l'une quelconque des revendications 1 à 13, **caractérisé en ce que** la partie de fixation (4) comprend un filetage extérieur.

15. Procédé d'extraction d'un pilier (2) d'une restauration dentaire à l'aide d'un extracteur (1) selon l'une quelconque des revendications 1 à 14, **caractérisé en ce que** la partie d'arbre (7) avec la partie de fixation (4) est insérée dans un canal de vissage d'une restauration dentaire, la partie de fixation (4) étant fixée à un pilier (2) via un évidement, la partie d'arbre (7) avec la saillie de liaison (8) étant ensuite reliée à la partie d'outil (3) via le manchon de liaison (9), et le pilier (2) étant ensuite extrait.
